# EUROPEAN PATENT SPECIFICATION

(11) **EP 3 063 835 B1**
(45) Date of publication and mention of the grant of the patent: **27.11.2019**
(21) Application number: 14789307.7
(22) Date of filing: 27.10.2014
(51) Int. Cl.: H01R 12/62, H01R 12/69, H01M 2/34, H01R 12/63, H01R 43/24

(54) **CONNECTION ARRANGEMENT FOR CONNECTING AT LEAST ONE VOLTAGE SOURCE AND/OR VOLTAGE SINK WHICH IS IN THE FORM OF A CELL OF A TRACTION BATTERY TO AN EXTERNAL ELECTRICAL COMPONENT AND ELECTRICAL ARRANGEMENT COMPRISING A CONNECTION ARRANGEMENT**
VERBINDUNGSANORDNUNG ZUM VERBINDEN VON WENIGSTENS EINER SPANNUNGSQUELLE UND/ODER SPANNUNGSSENKE IN FORM EINER ZELLE EINER TRAKTIONSBATTERIE AN EINE EXTERNE ELEKTRISCHE KOMPONENTE UND ELEKTRISCHE ANORDNUNG MIT EINER VERBINDUNGSANORDNUNG
AGENCEMENT DE CONNEXION POUR CONNECTER AU MOINS UNE SOURCE DE TENSION ET/OU UN COLLECTEUR DE TENSION, SE PRÉSENTANT SOUS LA FORME D'UNE CELLULE D'UNE BATTERIE DE TRACTION, À UN COMPOSANT ÉLECTRIQUE EXTERNE, ET AGENCEMENT ÉLECTRIQUE COMPRENANT UN AGENCEMENT DE CONNEXION

(30) Priority: 28.10.2013 DE 102013221870
(43) Date of publication of application: 07.09.2016
(73) Proprietor: TE Connectivity Germany GmbH, 64625 Bensheim (DE)
(72) Inventor: DRESSEL, Andre Martin, 68623 Lampertsheim (DE); VAN SEBROECK, Bart, 64625 Bensheim (DE); HAUCK, Uwe, 14532 Kleinmachnow (DE); GRZYWOK, Wilhelm, 81825 Munich (DE); BORMUTH, Peter, 64646 Heppenheim-Sonderbach (DE)
(74) Representative: Grünecker Patent- und Rechtsanwälte PartG mbB
(86) International application number: PCT/EP2014/073019
(87) International publication number: WO 2015/063035

(56) References cited:
- EP-A2- 0 337 400
- JP-A- 2013 152 918
- US-A- 5 770 818
- US-A1- 2009 223 041
- US-A1- 2012 019 061
- US-A1- 2013 157 112

## Description

The invention relates to a connection arrangement for connecting at least one voltage source and/or voltage sink which is in the form of a cell to an external electrical component and an electrical arrangement comprising a voltage source and/or sink and a connection arrangement.

There are voltage sources and/or voltage sinks in the form of cells, for example, in electrically driven vehicles in the form of galvanic cells, capacitors or super-capacitors ("Supercaps"). They are used therein to repeatedly take up and discharge electrical energy. In this instance, a plurality of cells are generally arranged one behind the other and/or beside each other. In order to be able to tap and control the voltage individually and/or in order to obtain current and/or voltage from the cells, connection arrangements are required. Since such electrical systems are often subjected to adverse environmental conditions, in previous solutions regions in which a connection is present are encapsulated, for example, by sealing, in order to prevent corrosion. This results in particular in a high level of production complexity in the case of a large number of cells.

US 2012/019061 and JP2013152918 disclose connection arrangements for connecting at least one voltage source and /or voltage sink which is in the form of a cell of a traction battery to an external battery according to the preamble of claim 1.

EP0337400 and US5770818 disclose a connection arrangement between a flat ribbon cable an lead wires wherein the lead wires are connected to the individual wires of the flat ribbon cable, and wherein said connection region is covered by a casting compound.

An object of the invention is to provide a solution in which the production complexity is low.

A connection arrangement according to the invention for connecting at least one voltage source which is in the form of a cell of a traction battery to an external electrical component comprises a cell contact for contacting the voltage source, a cell connection line connected to the cell contact and a connection line, which is connected to the cell connection line at the end thereof facing away from the cell contact, for connection to the external electrical component, wherein the cell connection line comprises the same material as the cell contact.

According to the invention, a casting compound, in particular a low-pressure injection- moulding compound, is fitted around a connection region, at which the connection line is connected to the cell connection line. The casting compound can be fitted by overmoulding the connection region. The connection region can be encapsulated by the casting compound. Sealing is a particularly simple possibility of protecting the connection region.

According to the invention, the cell connection line is secured to a base member by the casting compound. The cell connection line can thereby be retained on the base member, whereby the handling can be made easier in comparison with a freely movable connection line. In particular, the casting compound may form a tension relief member for the cell connection line. It may produce a mechanically stable connection between the cell connection line and another element, for example, a base member or a frame, so that tensile forces acting from the outer side are not transmitted to the connection line but instead to the other element.

An electrical arrangement according to the invention comprises a voltage source and a connection arrangement according to the invention.

Since the cell connection line and the cell contact comprise the same material, there is not produced between the two any electrochemical potential so that, even in the event of contact with moisture, for example, water which is introduced, no corrosion occurs between the two. Therefore, encapsulation of that connection location against environmental influences may become unnecessary. The production complexity can thereby be smaller.

The solution according to the invention can be further improved with the following developments and embodiments which are advantageous per se and which can be combined freely with each other.

The cell connection line and the connection line can be connected to each other in an electrically conductive manner by means of crimping. Such a connection can be produced with little production complexity because it can be produced in a purely mechanical manner, for example, in comparison with a welding or soldering connection, and does not require any electrical or thermal contacting with a tool. Nevertheless, the cell connection line and the connection line may naturally also be connected to each other in an electrically conductive manner by means of another connection mechanism, for instance, by means of welding or soldering.

The cell contact and the cell connection line can be secured in a ribbon-like retention member, the retention member having at one end a connection region, at which the cell connection line and the connection line are connected to each other. Such a connection arrangement is particularly compact and easy to handle. It is particularly possible to secure a plurality of cell contacts and a plurality of cell connection lines in a single ribbon-like retention member. This further makes handling and production easier. The retention member may be produced from a plastics material, for example, a thermoplastic plastics material. It may comprise a plastics frame.

A connection region, at which the connection line is connected to the cell connection line, may be encapsulated. Since the connection line does not necessarily comprise the same material as the cell connection line, corrosion, for example, at local elements, may be prevented by the encapsulation. Alternatively, such a connection region may also be in a region which is protected, for example, against environmental influences in a structural manner, whereby encapsulation is unnecessary.

A connection region, at which the connection line is connected to the cell connection line, may have a protective layer. Such a protective layer may provide good protection against environmental influences and corrosion and be particularly light. Such a protective layer may have, for example, a coating. The protective layer may comprise a metal, for instance, a precious metal, a plastics material or another insulating material. The protective layer may also particularly bring about electrical insulation.

The connection region may be covered by a covering layer. This may protect the connection region, for example, from fluids or from contaminating particles. The covering layer may be impressed. Such an arrangement may be simple to produce. The covering layer may be produced by applying a dispersion which subsequently hardens by a component being volatilised. Such a covering layer may be rapid-hardening so that the production process does not have to be interrupted. The covering layer may have a single component. This may, for example, harden alone or be hardened by a selective influence, for instance, by UV radiation. Alternatively, the covering layer may have two or more components, the covering layer only hardening when the plurality of components are combined. The configurations mentioned for the materials of the covering layer may naturally also apply to the casting compound.

It is possible for a plurality of cell connection lines to be provided for a plurality of cell contacts and a plurality of connection lines. A plurality of connection regions between a cell connection line and a connection line can be encapsulated together, respectively. For example, they can be surrounded by a single casting compound. This may be secured to the base member. The casting compound may form a tension relief member for such an assembly of cell connection lines and connection lines. Such embodiments are very compact and simple to produce.

The cell contact may be welded to the cell connection line. A welding connection often ensures a mechanically stable connection. In contrast to a configuration as known from the prior art, in which different materials are used, such a welding connection may also be exposed and does not have to be encapsulated.

The cell connection line may contain aluminium. In particular, the cell connection line may comprise aluminium. This is particularly advantageous if one or more of the electrodes of the voltage source also comprise(s) aluminium or contain(s) aluminium since then corrosion is also prevented in the connection region between the electrode and the cell contact. Irrespective of the electrode material, aluminium may also be advantageous in order to save weight. Alternatively, the cell connection line may also contain other metals, for example, copper, and in particular completely comprise those metals.

The cell connection line may be a portion of a ribbon-like connector, in particular a portion of a flat ribbon line or a flat ribbon cable. Such a ribbon-like connector is simple to handle and is flexible at the same time. In particular, a plurality of cell connection lines may be portions of a single ribbon-like connector. It is thereby possible to bundle the cell connection lines and to handle them together. Assembly is thereby made easier.

In a particularly compact embodiment, the connection arrangement comprises a plurality of cell connection lines which are arranged beside each other in a single ribbon-like connector. In particular, the cell connection lines may extend in a parallel manner in order to allow a compact configuration.

The connection line may comprise the same material as the cell contact. In particular, the cell contact, the cell connection line and the connection line may comprise the same material. In all the connection regions between the three elements, it is thereby possible to dispense with encapsulation or a protection, and corrosion between the elements is still effectively prevented. A change to another material can then be brought about, for example, in or on the external electrical component, for instance, a plug. Such a change may be structurally separated and/or structurally protected against environmental influences, whereby corrosion is prevented. Encapsulation may also be present in this region.

The cell contact may be in the form of an electrode for a galvanic cell. An element can thereby be saved, whereby the production costs are reduced.

In an electrical arrangement according to the invention, the voltage source and/or the voltage sink may be a galvanic cell, in particular a secondary cell. It is particularly advantageous if the cell contact is an electrode of the galvanic cell because an element is thereby saved, whereby the electrical arrangement can be produced in a particularly cost-effective manner.

Alternatively, the voltage source and/or voltage sink in the form of a cell can also be constructed differently, for example, it may be a capacitor, in particular a super-capacitor ("Supercap").

A cell contact may not only be used to contact a single cell, but may connect two cells simultaneously and consequently constitute a cell connector. For example, various voltage sources and/or voltage sinks may be connected to each other in parallel or in series, the cell contact/cell connector connecting the anode of a cell to the anode or cathode of a second cell. In such a configuration, the connection arrangement according to the invention can be used to tap a voltage in the intermediate region, for example, in order to tap and to control the voltages of the individual cells.

The invention is explained in greater detail below with reference to advantageous embodiments and the drawings. The developments and embodiments set out therein are independent of each other and can be freely combined with each other.

In the drawings:
Figure 1 is a schematic, perspective view of a connection arrangement according to the invention;
Figure 2 is a schematic, perspective exploded view of a portion of another connection arrangement according to the invention;
Figure 3 is a schematic, perspective view of a portion of a connection arrangement according to the invention together with a plurality of voltage sources and voltage sinks.

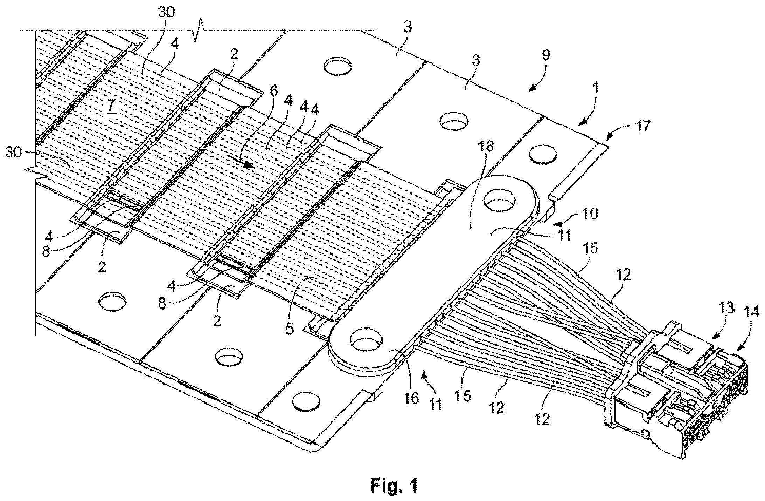

Figure 1 illustrates a connection arrangement 1 according to the invention. The connection arrangement 1 comprises cell contacts 2 which are connected to voltage sources which are located here in a state hidden under covers 3. The voltage sources simultaneously act as voltage sinks so that, in accordance with requirements, electrical power can be drawn or supplied and, for instance, stored. Each of the cell contacts 2 is connected to a cell connection line 4. The cell connection lines 4 are portions of a ribbon-like connector 5. The cell connection lines 4 are embedded in the ribbon-like connector 5 and extend beside each other, in particular in a parallel manner along the extent direction 6 of the ribbon-like connector 5.

The ribbon-like connector 5 has at the upper side 7 thereof welding openings 8 which are aligned with welding openings 8 fitted at the lower side of the ribbon-like connector 5. In the region of the welding openings 8, the cell connection lines 4 of the ribbon-like connector 5 which are exposed have been welded to the cell contacts 2. Since the cell contacts 2 and the cell contact line 4 comprise the same material, for instance, in the example shown, aluminium, encapsulation of the connection is unnecessary because there is not present between the two any electrochemical voltage which could result in corrosion between the two. Alternatively, for instance, copper could be used as the material for the cell connection line 4 and the cell contacts 2.

The ribbon-like connector 5 is produced in this instance by a flat ribbon line 9, a so-called FFC (Flat Flex Cable). It comprises an insulating outer member 30, for example, comprising plastics material, in which the cell connection lines 4 are embedded. The ribbon-like connector 5 may be bonded to the cell contacts 2 and/or the covers 3, for example, by melting an adhesive or the material of the outer member 30.

The cell contacts 2 and the cell connection lines 4 are fixed in a ribbon-like retention member 9. The ribbon-like retention member 9 has a connection region 10 at one end 11, at which the cell connection lines 4 and connection lines 12 are connected. The connection lines 12 serve to connect the cell connection lines 4 to an external electrical component 13, in this instance in the form of a plug 14. The connection lines 12 are surrounded by an insulation 15, with which they form a cable.

The connection region 11 between the cell connection lines 4 and the connection lines 12 is encapsulated by a casting compound 16. The casting compound 16 encapsulates all the connection regions between a cell connection line 4 and a connection line 12 at the same time. The casting compound 16 is in this instance a low-pressure casting compound which has been applied in an injection-moulding step, for example, by overmoulding. The casting compound 16 has been fixed to a base member 17. It is connected to the base member 17 in a mechanically stable manner and consequently forms a tension relief member 18 for the cell connection line 4. Tensile forces from the region of the plug 14 and the connection line 12 are taken up by the tension relief member 18 and directed into the base member 17 so that the cell connection lines 4 are not subjected to any mechanical loads.

The cell connection lines 4 are connected in the connection region 11 to the connection lines 12 in an electrically conductive manner by means of a crimping. That crimping is embedded in the casting compound 16, whereby the connection region 11 is encapsulated and protected from environmental influences.

Alternatively or additionally to the casting compound 16, the connection region 11 may be covered by a covering layer, for instance, by an impressed covering layer or a covering layer comprising a rapidly hardening dispersion adhesive. The material of the covering layer may comprise a material which hardens alone or by means of external influences, for instance, by UV irradiation. Furthermore, the covering layer may comprise, for example, two materials which only harden when they are in contact with each other. A casting compound 16 may also comprise the materials mentioned.

The connection lines 12 may comprise a different material from that of the cell connection lines 4. For example, the cell connection lines 4 may comprise aluminium and the connection lines 12 may comprise copper. As a result of the encapsulation with the casting compound 16, the connection produced in this manner is not at risk of corrosion.

In an alternative embodiment, the connection lines 12 may also comprise the same material as the cell connection lines 4 and the cell contacts 2, that is to say, in this instance also aluminium. In this case, encapsulation of the connection region 11 between the cell connection lines 4 and the connection lines 12 would not be absolutely necessary because there is also then no electrochemical potential between the two in this instance. A change to another material, for example, to copper, could then be brought about in the region of the plug 14.

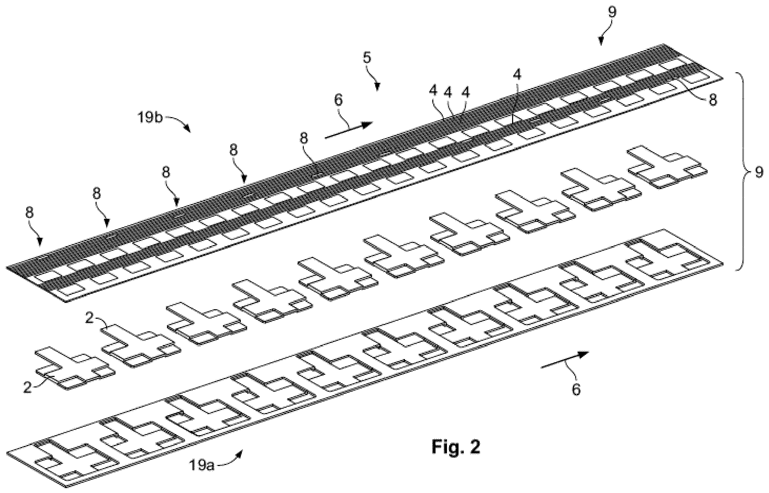

Figure 2 is an exploded view of a portion of another connection arrangement 1 according to the invention. There are shown a plurality of cell contacts 2 which are arranged one behind the other in an extent direction 6 of a ribbon-like connector 5. The cell connection lines 4 are in a state embedded as thin wires in the ribbon-like connector 5 and are connected to a cell contact 2 in the region of a welding opening 8, respectively. The cell contacts 2 and the cell connection lines 4 are secured in a ribbon-like retention member 9. What is not shown in this instance, at one end of the ribbon-like retention member 9, is a connection region in which the cell connection lines 4 are connected to connection lines. The ribbon-like retention member 9 has a lower portion 19a comprising a deep-drawn plastics plate and an upper portion 19b which is in the form of a flat ribbon line in this instance. The cell contacts 2 are embedded between the lower portion 19a and the upper portion 19b.

Voltage sources, for example, galvanic cells, can be contacted by the cell contacts 2 through openings 20 in the lower portion 19a. The cell contacts 2 shown here can be contacted at a total of four locations from below per cell contact 2. Two locations are used to contact an electrode of a galvanic cell, respectively.

In the embodiment shown here, the cell contacts 2 are in the form of cell connectors 21 which connect two galvanic cells to each other. In this instance, the anode of a first galvanic cell can be bridged with the cathode of a second galvanic cell by a cell contact 2. A second cell contact 2 can again connect the anode of the second galvanic cell to the cathode of a third galvanic cell, etc. Voltage is built up as a result of this serial connection of the galvanic cells. In an alternative embodiment, a parallel connection could also be brought about, for example, in order to be able to draw a high current. In the serial connection shown, a cell connection line 4 is used to tap a control voltage at the cell contacts 2. The function and the charging state of the individual galvanic cells can thereby be monitored constantly.

Alternatively to the shown contact arrangement of a galvanic cell with a cell contact 2, a cell contact 2 can also be constructed in such a manner that it is simultaneously an electrode of the galvanic cell. It is thereby possible to save an element, whereby the production costs are reduced.

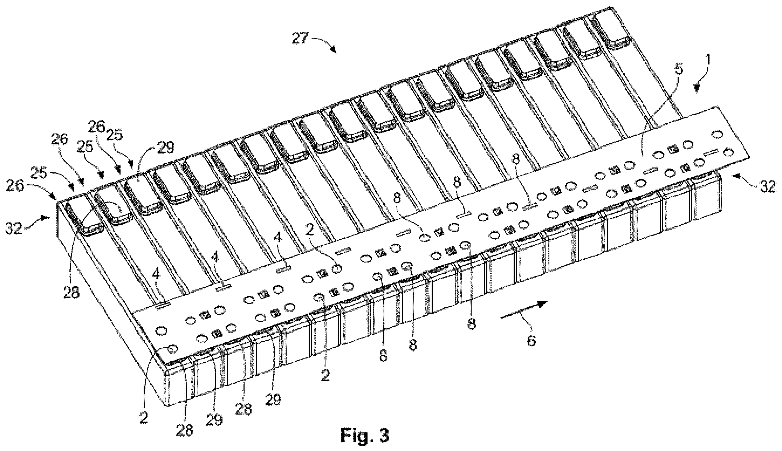

Figure 3 illustrates by way of example a use of a connection arrangement 1 according to the invention. The connection arrangement 1 is only partially shown. Figure 3 shows a traction battery 27, in which a large number of voltage sources and voltage sinks 25 in the form of galvanic cells 26 are connected to each other. The voltage sources and voltage sinks 25 are arranged in a row one behind the other, a voltage source and voltage sink 25 being rotated through 180° relative to the adjacent voltage sources and sinks so that an anode 28 is located between two cathodes 29, respectively. An anode 28 and a cathode 29 of two different galvanic cells 26 are connected to each other via the cell contacts 2. In order to be able to tap a voltage at a location between two voltage sources 25, the cell connection lines 4 are connected to the cell contacts 2. The cell connection lines 4 extend parallel with each other along an extent direction 6 of a ribbon-like connector 5 and lead to the edge of the traction battery 27. Another connector 5 (not illustrated here) connects the electrodes which are illustrated at the top in Figure 3. That second connector 5 is offset relative to the first connector 5 by a cell so that overall the current path extends substantially in a zig-zag manner. At ends 32, the cell contacts 2 are connected only to a single electrode of a galvanic cell 26. The total voltage can then be tapped at those cell contacts 2.

The Figures show by way of example galvanic cells 26 as voltage sources and sinks 25 in the form of cells. Alternatively, other types of voltage sources and/or sinks 25 in the form of cells may also be used, for example, capacitors, in particular super-capacitors ("Supercaps").

### Reference numerals

- 1: Connection arrangement
- 2: Cell contact
- 3: Cover
- 4: Cell connection line
- 5: Ribbon-like connector
- 6: Extent direction
- 7: Upper side
- 8: Welding opening
- 9: Ribbon-like retention member
- 10: End
- 11: Connection region
- 12: Connection line
- 13: External electrical component
- 14: Plug
- 15: Insulation
- 16: Casting compound
- 17: Base member
- 18: Tension relief member
- 19a: Lower portion
- 19b: Upper portion
- 20: Opening
- 21: Cell connector
- 25: Voltage source and sink
- 26: Galvanic cell
- 27: Traction battery
- 28: Anode
- 29: Cathode
- 30: Outer member
- 32: End

## Claims

1. Connection arrangement (1) for connecting at least one voltage source and/or voltage sink (25) which is in the form of a cell of a traction battery (27) to an external electrical component (13), comprising a cell contact (2) for contacting the voltage source and/or sink (25), a cell connection line (4) connected to the cell contact (2) and a connection line (12), which is connected to the cell connection line (4) at the end thereof facing away from the cell contact (2), for connection to the external electrical component (13), wherein the cell connection line (4) comprises the same material as the cell contact (2), **characterized in that** a casting compound (16) is fitted around a connection region (11), at which the connection line (12) is connected to the cell connection line (4), wherein the cell connection line (4) is secured to a base member (17) of the traction battery (27) by the casting compound (16).

2. Connection arrangement (1) according to claim 1, wherein the cell connection line (4) and the connection line (12) are connected to each other in an electrically conductive manner by means of crimping.

3. Connection arrangement (1) according to claim 1 or 2, wherein the cell contact (2) and the cell connection line (4) are secured in a ribbon-like retention member (9), and wherein the retention member (9) has at one end (10) a connection region (11), at which the cell connection line (4) and the connection line (12) are connected to each other.

4. Connection arrangement (1) according to any one of claims 1 to 3, wherein a connection region (11), at which the connection line (12) is connected to the cell connection line (4), is encapsulated.

5. Connection arrangement (1) according to any one of claims 1 to 4, wherein a connection region (11), at which the connection line (12) is connected to the cell connection line (4), has a protective layer.

6. Connection arrangement (1) according to any one of claims 1 to 5, wherein the cell contact (2) is welded to the cell connection line (4).

7. Connection arrangement (1) according to any one of claims 1 to 6, wherein the cell connection line (4) contains aluminium.

8. Connection arrangement (1) according to any one of claims 1 to 7, wherein the cell connection line (4) is a portion of a ribbon-like connector (5).

9. Connection arrangement (1) according to any one of claims 1 to 8, wherein the connection arrangement (1) comprises a plurality of cell connection lines (4) which are arranged beside each other in a single ribbon-like connector (5).

10. Connection arrangement (1) according to any one of claims 1 to 9, wherein the connection line (12) comprises the same material as the cell contact (2).

11. Electrical arrangement comprising a voltage source and/or sink (25) and a connection arrangement (1) according to any one of claims 1 to 10.

12. Electrical arrangement according to claim 11, wherein the voltage source and/or the voltage sink (25) is/are a galvanic cell (26).

13. Electrical arrangement according to claim 12, wherein the cell contact (2) is an electrode of the galvanic cell (26).

## Patentansprüche

1. Verbindungsanordnung (1) zum Verbinden wenigstens einer Spannungsquelle und/oder Spannungssenke (25), die die Form einer Zelle einer Traktionsbatterie (27) hat, mit einem externen elektrischen Bauteil (13), umfassend einen Zellenkontakt (2) zum Kontaktieren der Spannungsquelle und/oder -senke (25), eine an den Zellenkontakt (2) angeschlossene Zellenanschlussleitung (4) und eine an deren vom Zellenkontakt (2) abgewandten Ende an die Zellenanschlussleitung (4) angeschlossene Verbindungsleitung (12) zur Verbindung mit dem externen elektrischen Bauelement (13), wobei die Zellenanschlussleitung (4) das gleiche Material umfasst wie der Zellenkontakt (2), **dadurch gekennzeichnet, dass** eine Vergussmasse (16) um einen Verbindungsbereich (11) herum eingebracht ist, an dem die Verbindungsleitung (12) mit der Zellenanschlussleitung (4) verbunden ist, wobei die Zellenanschlussleitung (4) über die Vergussmasse (16) an einem Grundkörper (17) der Traktionsbatterie (27) befestigt ist.

2. Verbindungsanordnung (1) nach Anspruch 1, wobei die Zellenanschlussleitung (4) und die Verbindungsleitung (12) durch Crimpen elektrisch leitend miteinander verbunden sind.

3. Verbindungsanordnung (1) nach Anspruch 1 oder 2, wobei der Zellenkontakt (2) und die Zellenanschlussleitung (4) in einem bandförmigen Haltekörper (9) befestigt sind, und wobei der Haltekörper (9) einen Verbindungsbereich (11) an einem Ende (10) aufweist, an dem die Zellenanschlussleitung (4) und die Verbindungsleitung (12) miteinander verbunden sind.

4. Verbindungsanordnung (1) nach einem der Ansprüche 1 bis 3, wobei ein Verbindungsbereich (11), an dem die Verbindungsleitung (12) mit der Zellenanschlussleitung (4) verbunden ist, gekapselt ist.

5. Verbindungsanordnung (1) nach einem der Ansprüche 1 bis 4, wobei ein Verbindungsbereich (11), an dem die Verbindungsleitung (12) mit der Zellenanschlussleitung (4) verbunden ist, eine Schutzschicht aufweist.

6. Verbindungsanordnung (1) nach einem der Ansprüche 1 bis 5, wobei der Zellenkontakt (2) an die Zellenanschlussleitung (4) angeschweißt ist.

7. Verbindungsanordnung (1) nach einem der Ansprüche 1 bis 6, wobei die Zellenanschlussleitung (4) Aluminium enthält.

8. Verbindungsanordnung (1) nach einem der Ansprüche 1 bis 7, wobei die Zellenanschlussleitung (4) ein Teil eines bandförmigen Verbinders (5) ist.

9. Verbindungsanordnung (1) nach einem der Ansprüche 1 bis 8, wobei die Verbindungsanordnung (1) mehrere Zellenanschlussleitungen (4) umfasst, die nebeneinander in einem einzigen bandförmigen Verbinder (5) angeordnet sind.

10. Verbindungsanordnung (1) nach einem der Ansprüche 1 bis 9, wobei die Verbindungsleitung (12) das gleiche Material umfasst wie der Zellenkontakt (2).

11. Elektrische Anordnung, die eine Spannungsquelle und/oder -senke (25) sowie eine Verbindungsanordnung (1) nach einem der Ansprüche 1 bis 10 umfasst.

12. Elektrische Anordnung nach Anspruch 11, wobei die Spannungsquelle und/oder die Spannungssenke (25) eine galvanische Zelle (26) sind/ist.

13. Elektrische Anordnung nach Anspruch 12, wobei der Zellenkontakt (2) eine Elektrode der galvanischen Zelle (26) ist.

## Revendications

1. Agencement de connexion (1) pour connecter au moins une source de tension et/ou un collecteur de tension (25) qui se présente sous la forme d'une cellule d'une batterie de traction (27) à un composant électrique externe (13), comprenant un contact de cellule (2) pour contacter la source de tension et/ou le collecteur (25), une ligne de connexion cellulaire (4) connectée au contact de cellule (2) et une ligne de connexion (12) qui est connectée à la ligne de connexion cellulaire (4) à son extrémité opposée au contact de cellule (2), pour assurer une connexion avec le composant électrique externe (13), la ligne de connexion de cellule (4) comprenant le même matériau que le contact de cellule (2), **caractérisé en ce qu'**une masse de coulée (16) est prévue autour d'une zone de connexion (11) dans laquelle la ligne de connexion (12) est reliée à la ligne de connexion de cellule (4), la ligne de connexion de cellule (4) étant fixée à un organe de base (17) de la batterie de traction (27) par la masse de coulée (16).

2. Agencement de connexion (1) selon la revendication 1, dans lequel la ligne de connexion de cellule (4) et la ligne de connexion (12) sont reliées l'une à l'autre d'une manière électriquement conductrice par sertissage.

3. Agencement de connexion (1) selon les revendications 1 ou 2, dans lequel le contact de cellule (2) et la ligne de connexion de cellule (4) sont fixés dans un élément de retenue (9) en forme de ruban, et dans lequel l'élément de retenue (9) présente à une extrémité (10) une zone de connexion (11), dans laquelle la ligne de connexion de cellule (4) et la ligne de connexion (12) sont reliées entre elles.

4. Agencement de connexion (1) selon l'une quelconque des revendications 1 à 3, dans lequel une zone de connexion (11), dans laquelle la ligne de connexion (12) est reliée à la ligne de connexion (4) de la cellule, est encapsulée.

5. Agencement de connexion (1) selon l'une quelconque des revendications 1 à 4, dans lequel une zone de connexion (11), dans laquelle la ligne de connexion (12) est reliée à la ligne de connexion (4) de la cellule, présente une couche de protection.

6. Agencement de connexion (1) selon l'une quelconque des revendications 1 à 5, dans lequel le contact de cellule (2) est soudé à la ligne de connexion de cellule (4).

7. Agencement de connexion (1) selon l'une quelconque des revendications 1 à 6, dans lequel la ligne de connexion cellulaire (4) contient de l'aluminium.

8. Agencement de connexion (1) selon l'une quelconque des revendications 1 à 7, dans lequel la ligne de connexion de cellules (4) est une partie d'un connecteur en forme de ruban (5).

9. Agencement de connexion (1) selon l'une quelconque des revendications 1 à 8, dans lequel l'agencement de connexion (1) comprend une pluralité de lignes de connexion de cellules (4) qui sont disposées les unes à côté des autres dans un seul connecteur (5) du type ruban.

10. Agencement de connexion (1) selon l'une quelconque des revendications 1 à 9, dans lequel la ligne de connexion (12) comprend le même matériau que le contact de cellule (2).

11. Agencement électrique comprenant une source de tension et/ou un collecteur de tension (25) et un agencement de connexion (1) selon l'une quelconque des revendications 1 à 10.

12. Agencement électrique selon la revendication 11, dans lequel la source de tension et/ou le collecteur de tension (25) est une cellule galvanique (26).

13. Agencement électrique selon la revendication 12, dans lequel la source de tension et/ou le collecteur de tension (2) est une cellule galvanique (26).
